# EUROPEAN PATENT APPLICATION

(11) **EP 1 389 411 A1**
(43) Date of publication of application: **18.02.2004**
(21) Application number: 03396056.8
(22) Date of filing: 12.06.2003
(51) Int. Cl.: A01B 33/02

(54) **Apparatus and method for levelling of gravel road or corresponding non-paved ground and blade for removal of non-paved ground**

(30) Priority: 12.06.2002 FI 20021136
(71) Applicant: Konepaja Timeka Oy, 23100 Mynämäki (FI)
(72) Inventor: Mattila, Kauko, 23800 Laitila (FI)
(74) Representative: Nordin, Leif Göran

(57) **Abstract**

The object of the invention is an apparatus (11) to be attached to a work machine (49) for levelling a gravel road (46) or corresponding unpaved ground, and a method and blade (1, 31) for the same purpose. The apparatus (11) loosens roughness of the ground by rotating the blade shaft (3) and the blades (1, 31), which are detachably attached to the shaft. The loosened ground is levelled by a levelling drag (15) or a corresponding levelling means. At least two or more bent parts (4 - 7, 35 - 42) are arranged at the edge of the blade (1, 31) at an angle with regard to the plane of the central part of the plate-like blade (1) according to the invention.

## Description

The invention relates to an apparatus and to a method for levelling a gravel road or corresponding unpaved ground and to a blade suitable for the removal of unpaved ground according to the preambles of the independent claims presented below. Particularly the invention relates to the levelling of a gravel road and corresponding unpaved ground with means, which can be coupled to a tractor or a corresponding apparatus.

Unpaved grounds, such as gravel roads, will become uneven in the course of time. For instance in gravel roads the running paths of the tyres will wear and sink to form deep grooves. On the other hand the space between the grooves and the margins of the road become high ridges due to a low wear and the sinking of the ground, and due to the accumulation of material, which comes loose from the grooves. Erosion and soil frost also cause unevenness of the ground. In the course of time undesired unevenness will also appear in other unpaved grounds, such as yards and lawns. The road banks should also be levelled from time to time. Traditionally different levelling drags and corresponding levelling means to be dragged and/or pushed on the ground are used as such or in different combinations to level gravel roads and the like.

A typical prior art levelling drag apparatus used for the levelling of a gravel road or corresponding ground, presented for instance in the Finnish patent FI 95949, comprises a frame, which is intended to be attached to a working machine, e.g. to the lifting mechanism of a tractor, and a first drag blade or drag blade group attached to the frame and a second drag blade or drag blade group attached to the frame. The main purpose of the first blade is to take down elevations in the road. The main purpose of the second blade is to move the loosened ground into the grooves in the road. The prior art levelling drag must be strongly pressed against the ground in order to always keep the first blade ripping the ground at the desired depth. When the passively operating first blade or group of blades based on ripping meets a hard and/or tough spot in the ground, for instance clay, then there is a risk that large clods come loose from the ground, which the second blade group is unable to move into the grooves in the road. Clods of clay, some times even large, which are left on the road or the road margins, are nowadays a problem in road maintenance. Present levelling devices are inaccurate - a part of the bumps will not be filled, and much good road gravel is moved to the road bank during the dragging operation. Several different techniques are known in prior art for making the operation of levelling drags more accurate, for instance by arranging the drag blades so that they can be turned around shafts in different directions. An improved dragging quality is also sought by locating the blades in different blade groups and by shaping the blades in a new way. Despite this the quality of the work results of the present passive levelling drags could be considerably improved. The publication US 816085 presents one such passive smoothing apparatus to be pulled behind a horse.

The object of the present invention is to reduce or even to eliminate the problems in prior art, which were mentioned above.

An object of the invention is particularly to provide an apparatus and a method, which are more effective than previously and which make a better quality in the levelling of a gravel road or corresponding unpaved ground and a blade suitable for loosening unpaved ground.

The invention is characterised in what is presented in the characterising parts of the enclosed independent claims.

Some possible and preferred embodiment examples are presented in the enclosed dependent claims.

All embodiments and their advantages presented in this description suitably concern both an apparatus and a method as well as a blade according to the invention, even if this is not mentioned separately for each embodiment and advantage.

A typical apparatus according to the invention to be attached to a work machine for levelling a gravel road or corresponding unpaved ground comprises a frame, and attached to it
- means for loosening roughness of the ground,
- means for levelling the loosened ground,
- means for removable fastening of the apparatus to a work machine, and
- power transmission means for transmitting power from said work machine to said means for loosening roughness of the ground.

Typical means for loosening roughness of the ground comprise a blade shaft, which is arranged to rotate by the power transmitted by the power transmission means, and one or more blades, which are detachably attached to the shaft.

In the method according to the invention for levelling a gravel road or corresponding unpaved ground, an apparatus, which is detachably attached to a work machine, is moved on the ground to be levelled, whereby the apparatus loosens roughness of the ground and levels the loosened ground with a levelling drag or a corresponding passive leveller. In a typical such method the power mainly loosening the roughness of the ground is transmitted by the power transmission means from the work machine to the blade shaft of the apparatus, whereby the shaft is rotated by said power, and whereby one or more blades are detachably attached to the shaft and kept in contact with the ground to be levelled during the operation of the apparatus.

A work machine refers to a tractor, a wheel-mounted loader, or any other machine having attachment means, in which an apparatus according to the invention can be detachably attached. The work machine must have a power outlet, which can be connected to the power transmission means of the apparatus according to the invention. The power outlet can be hydraulic, mechanic, electric or any other connection, to which the power transmission means of the apparatus according to the invention can be connected.

In other words, in a typical apparatus according to the invention and in a typical method according to the invention the power obtained from the work machine rotates the blade shaft, whereby blades attached to the shaft loosen roughness for example of a road surface. Then this loosened ground is levelled with a drag blade or a corresponding traditional levelling apparatus. Because a traditional levelling drag blade of this kind is not as such an object of the invention we do not here discuss its details, such as any means arranged between the frame and the levelling drag for changing the position of the levelling drag with regard to the frame, or the shaping of the drag blade.

A typical blade according to the invention is intended for use in an apparatus and a method according to the invention. A typical blade is mainly round and plate-like, and at its edge there is at least one part, which is bent in an angle with regard to the plane of the blade's central part.

The most important advantage of the invention is that the blades of the blade shaft loosen and crush the ground before the drag blade levels the ground into recesses of the ground, e.g. into grooves in a gravel road. As only finely crushed ground reaches the drag blade the levelled ground will become smoother than with traditional means. There will be a smaller amount of large clods, for instance clay clods in the levelled ground, for instance in a gravel road, and the loosened ground will be used more effectively than with traditional equipment. During levelling of a road the apparatus and the method according to the invention will waste less ground to the road banks than the use of traditional methods. Due to the ground crushing action the apparatus, the method and the blade according to the invention will function well also on such ground, which contains much roots of plants, peat, clay or gravel. An apparatus according to the invention can have a lighter structure than prior art levelling drag devices, as the rotating blades cut into the gravel road or the like with the aid the of a lighter pressure than a traditional drag blade.

An advantageous apparatus according to the invention comprises fixing means for attaching the apparatus to the lifting mechanism of a work machine. Thus when desired, for instance the driver of a tractor can always lift the apparatus to disengage it from the ground. On the other hand, when required the lifting mechanism can press the apparatus according to the invention downwards, deeper into the ground to be levelled.

In an advantageous apparatus and method according to the invention the blade shaft is arranged typically at least mainly horizontal as the blades touch the levelled ground. Typically a blade like this is particularly suitable for the levelling of e.g. the roadway of a highway. A particularly advantageous apparatus contains means for turning the blade shaft into a substantial angle with regard to the horizontal as the blades attached to it touch the ground to be levelled. Advantageously the apparatus comprises means for adjusting the blade shaft into any angle with regard to the horizontal. Then the ground can be levelled into a desired obliqueness. An oblique levelling is required for instance when an apparatus or method according to the invention is used to level road banks sloping downwards from the road.

In an advantageous apparatus according to the invention the blade shaft is arranged in an angle of less than 90 degrees regarding the pulling direction of the apparatus. In test runs we have found that a blade shaft with an angle deviating from the perpendicular to the pulling direction functions better than in a perpendicular direction. A very effective angle of the blade shaft is between 70 and 85 degrees, but the best results have been obtained using an angle of 75 to 80 degrees to the pulling direction.

An apparatus according to the invention comprises advantageously a sub-frame, which is movably attached to the frame, and the devices treating the ground are then attached to the sub-frame. When desired, it is then possible to change the position of the ground treating devices with regard to the frame and the work machine. For instance, the ground treating devices can be turned around a horizontal or vertical axis with regard to the work machine. The sub-frame is advantageously movable with regard to the frame of the apparatus, even so that the blade shaft and the dragging means can be made to treat the ground outside the width of the work machine. Then the apparatus according to the invention can conveniently level also the road banks. In the method according to the invention the work machine can be driven on the road, even if the blade shaft at the same time is kept completely outside the road where it levels the ground.

The advantageous blades according to the invention are mainly planar and circular, or sectors of a circle. Typically the blades are arranged on the blade shaft mainly perpendicular with regard to the direction of the blade shaft. The edge of a blade according to the invention is preferably provided with at least one part, which is bent with regard to the plane of the blade's central part. The bent parts can be in pairs at the edge of the blade, on the opposite sides of the blade's centre. The bent parts are then advantageously bent symmetrically, so that the opposite bent parts are mutually at least substantially of the same size and at the same angle with regard to the plane of the blade's central part. Advantageously they are also bent towards the same side of the blade. In the most advantageous case the blade has several bent parts or pairs of bent parts, and at least one bent part or pair of bent parts is arranged on both sides of the blade. A very advantageous blade has bent parts along its whole periphery, preferably so that the successive bent parts are always bent into different directions with regard to the plane of the blade's central part. The features of a blade according to the invention mentioned above increase the treating effect, increase the durability of the blade, and make it easier to manufacture a blade. The bent parts of the blade, and particularly the edges which are bent into both directions, cut the ground effectively and crush it so that the levelling drag or a corresponding means can easily level the bumps in the ground with loosened, relatively fine earth. The bending angle of the edges in a blade according to the invention and the segment size formed by a bent edge will also have a great effect on the treating results. The edges of the blade are preferably bent into an angle of 140 to 165 degrees, more preferably 150 to 155 degrees with regard to the plane of the blade's central part, and most preferably said angle is about 153 degrees. The height of a bent segment is advantageously about one sixth of the diameter of the whole circular blade, typically about 65 mm.

An advantageous blade according to the invention has the form of a sector of a circle, still more advantageously a semi-circle. The planar central part of such a blade is typically provided with attachment means for attaching it detachably to a blade shaft. The attachment means can for instance be holes suitable for bolts, whereby the blades can be fastened to flanges arranged on the blade shaft with the aid of the holes and the bolts. When the blade is a circle sector or a semicircle like that mentioned above, the bent parts on the blade's edge and periphery refer to bent parts on the circular outer edge of such a part of the blade circle's peripheral part. An advantage of such a blade with a form of a partial circle is that it is easy to replace. The blades can be replaced and removed one at a time, as the blade will immediately fall off the blade shaft when the attachment means have been released. If the blade shaft would pass through a hole in the centre of the blade, then it would be necessary to first take the blade shaft out from its frame and then slip the blades off the blade shaft over its end.

The invention is described in more detail below with reference to the enclosed schematic drawing, in which
Figure 1 shows a blade according to the invention, as seen in the direction of the blade shaft;
Figure 2 shows the blade of figure 1 seen from one side;
Figure 3 shows an apparatus according to the invention in a top view;
Figure 4 shows the apparatus of figure 3 seen from one side;
Figure 5 shows the apparatus of figure 3 in a view from the back;
Figure 6 shows another blade according to the invention, as seen in the direction of the blade shaft;
Figure 7 shows the cross-section A - A of the blade in figure 6;
Figure 8 shows a road and its road bank;
Figure 9 shows levelling of the road bank in figure 8; and
Figure 10 shows the road and the road bank of figure 8 after the levelling operation of the figure 9.

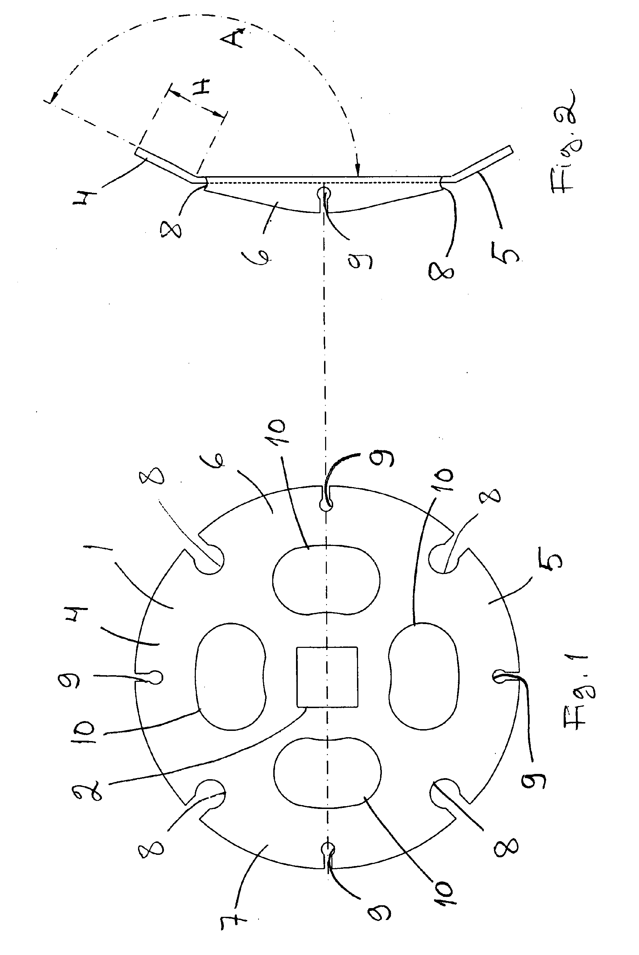

Figures 1 and 2 show a preferred blade 1 according to the invention. The blade 1 is mainly circular and plate-like. A square hole 2 is located at the centre of the blade 1 for the square blade shaft 3. Figure 2 shows how the edges of the blade have bent segments 4, 5, 6 and 7. Four bending recesses 8 are formed for the bent parts at equal intervals in the edges of the blade 1, whereby the bending of the segments 4, 5, 6 and 7 is easily made through these recesses. Ripping recesses 9 are formed in the edge of the blade 1, centrally in the segments 4, 5, 6 and 7, in order to enhance the ripping effect of the blade 1 in the ground. The blade 1 has further relief holes 10. The figure 2 shows the height H of a segment, which most advantageously is about 65 mm. The letter A in figure 2 represents the angle, in which the blade's segments 4, 5, 6 and 7 are bent with regard to the plane of the blade's 1 centre. In the preferred exemplary blade the angle A is 153 degrees. Figure 2 shows how a rotating blade 1 due to its bent segments 4, 5, 6 and 7 will treat an area, which is much wider than the thickness of the blade.

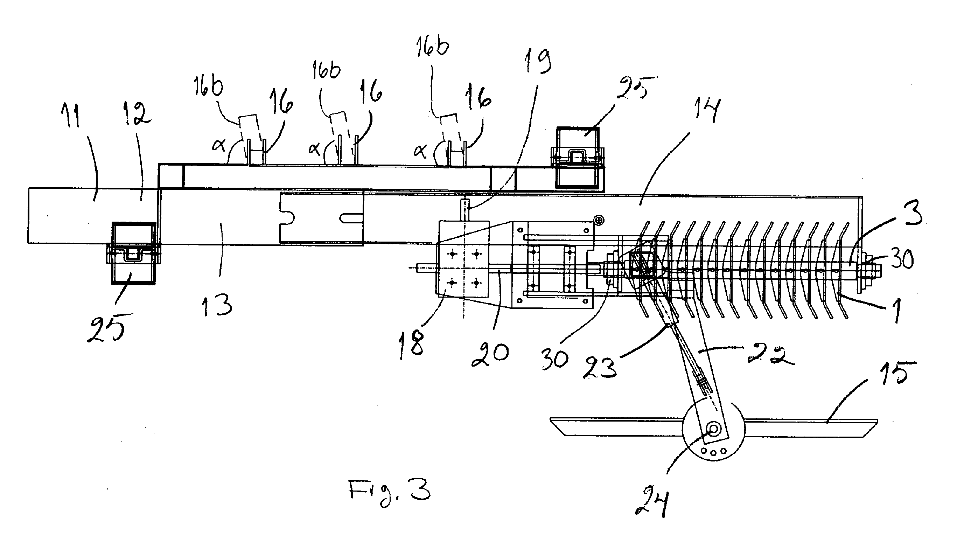

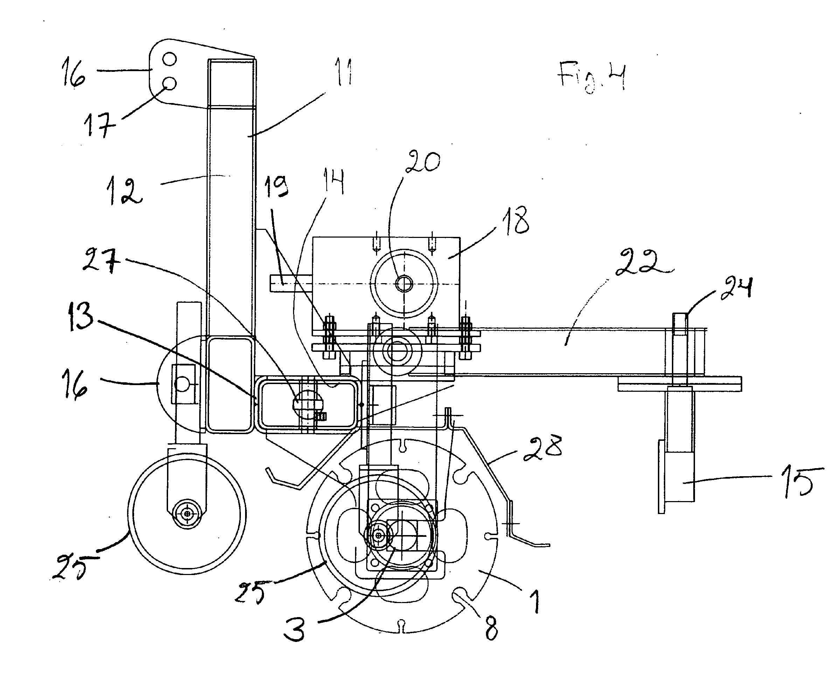

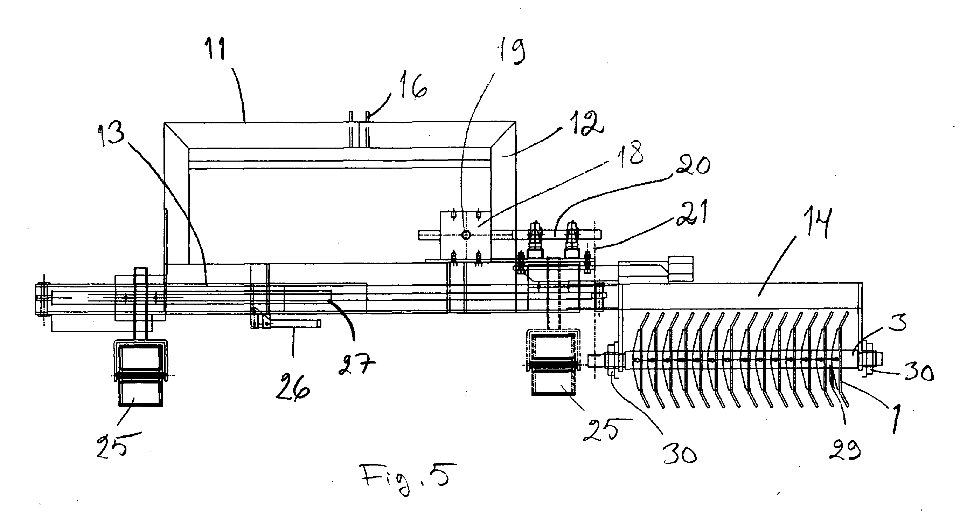

The figures 3, 4 and 5 are drawn so that they are partly transparent. The figures show an advantageous apparatus 11 for levelling a gravel road or corresponding unpaved ground. The apparatus 11 has a fixed frame 12 with a sleeve-like rail 13, and a boom 14 is arranged to be movable in the rail and thus movable in the sideways direction of the apparatus. In the position shown in the figures the boom 14 is in one of its extreme positions, or seen in the figure 3, in the extreme position on the right side. A blade shaft 3 according to the invention with its blades 1 and a levelling drag 15 are attached to the boom 14. Figure 5 does not show the levelling drag 15. Attachment means 16 are fastened to the frame 12, and for instance the lifting mechanism at the rear of a tractor can be detachably attached to these attachment means. Figure 4 shows the holes 17 for a bolt attachment in the attachment means 16. Figure 3 shows with broken lines advantageous alternative attachment means 16b, which are arranged so that the blade shaft (3) has an angle α of about 77 degrees with regard to the pulling direction of the apparatus 11. In test runs the apparatus 11 and its blades 1 have been found to function most effectively when the angle α is 75 to 80 degrees. The blades are quite effective also when the angle α is 70 to 85 degrees. A situation where the angle α is 45 to 70 degrees or 85 to 89 degrees has also been found to be more effective than a completely perpendicular position. The suitable and most effective angle may of course vary, for instance depending on the ground or on the blades.

Power transmission means are also attached to the boom 14 for transmitting driving power from a tractor or the like in order to rotate the blade shaft 3. The power source of the tractor is connected to the input connector 19 of the herringbone gear 18. The herringbone gear transforms the power supplied to the input connector into a rotational motion of the driving shaft 20, which is transversal with regard to the apparatus. Via a transmitting chain 21 the driving shaft 20 rotates the blade shaft 3 and the blades 1 attached to it.

Figure 3 shows how the levelling drag is attached to the boom 14 via a bar 22. A hydraulic cylinder 23 is arranged between the drag bar 22 and the boom 14, so that a movement of the cylinder can control the vertical position of the bar 22 and thus also of the levelling drag 15. The position of the levelling drag 15 with regard to the bar 22 can be adjusted around a vertical axis 24. In the apparatus the blade shaft 3 and the levelling drag 15 can be advantageously moved together with regard to the work machine, as shown in the figures. Then the levelling drag 15 automatically runs behind the blade shaft 3 and levels the ground, which has been loosened by the blades 1, and it is not necessary to separately control the positions of the levelling drag 15 and the blade shaft 3.

Two wheels 25 with their rods are attached to the fixed frame 12. The apparatus 11 rides on the wheels as it is moved by a tractor. The position of the wheels 25 can be variable in the height direction. A parking support 26 is also attached to the frame 12. The boom 14 moves in the rail 13 supported by a displacement cylinder 27. The cover 28 seen in figure 4 protects the blade shaft.

The blade shaft 3 of the apparatus in the figures has 14 blades 1. All blades 1 are located on the shaft 3 in a similar position, so that the bent segments, which are bent in one direction, are always located on the same side of the shaft 3. The blades are slid on the shaft 3 with alternating spacers 29. In the direction of the blade shaft the spacers 29 have a thickness, which approximately equals or is preferably slightly less than the total width of a bent blade 1 in the direction of the blade shaft 3 (see figure 2). In this way the blades 1 crush the ground over the whole width of the blade apparatus. The spacers 29 can of course be integral parts of the blades 1. Preferably the blades 1 and the spacers 29 are separate parts, so that broken or otherwise defective blades 1 can be separately replaced. The blades 1 are replaced by loosening the bolts 30 from the end of the blade apparatus, whereby the blade shaft 3 is released and the blades 1 and the spacers 2 can be slipped off from the shaft 3.

The apparatus of figures 3 to 5 functions so that the apparatus 11 is attached with its attachment means 16 to the lifting mechanism at the rear of a tractor. The hydraulic outlet of the tractor or the like is connected to the power input connector 19 of the herringbone gear 18. In order to begin the levelling of the ground the boom 14 is moved into a suitable position and the apparatus 11 is lowered with the aid of the tractor's lifting mechanism to a suitable height from the ground, so that the supporting wheels 25 and the blades 1 touch the ground. A suitable height of the levelling drag 15 from the ground surface is adjusted with the aid of the hydraulic cylinder 23. When beginning the levelling of the ground the apparatus 11 is pulled behind the tractor or the like. At the same time the rotation of the blade shaft 3 is started, whereby the blades 1 treat the ground to make it suitably fine. Then the levelling drag 15 travelling behind the blades will effectively level this fine ground. The blade shaft 3 can be rotated in either direction, depending on the requirements.

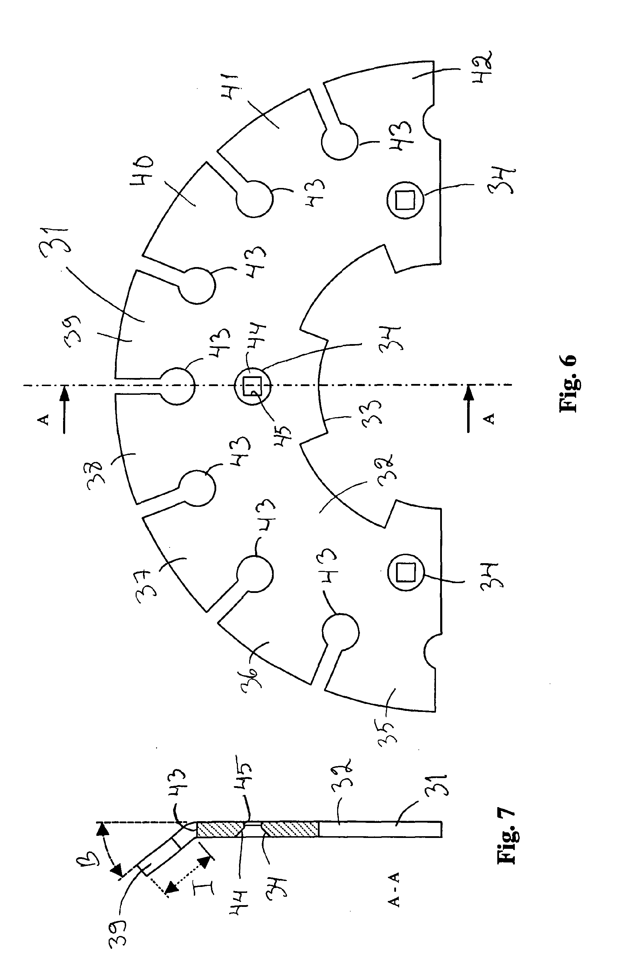

Figures 6 and 7 present another blade 31 according to the invention. The blade 31 is mainly semicircular. The planar central part 32 of the blade contains a recess 33 with a shape, which fits on a corresponding shape on the blade shaft 3. Further the planar central part 32 contains holes 34 to let through the bolts, which fasten the blades to the blade shaft. The blade shaft contains for instance flanges (not shown), which have holes in the places corresponding to the holes 34. A second blade similar to the blade 31 is of course fastened to the same flanges, so that these two blades together form an approximately whole circular blade. Segments 35 to 42 are bent into the edges of the blade 31. Bending recesses 43 are formed at equal intervals at the edges of the blade 31 for the bent parts, whereby the bending of the segments 35 to 42 is easily made through these recesses. Adjacent segments are always bent in the opposite directions. In other words, the segments 35, 37, 39 and 41 are bent in one direction with regard to the planar central part 32, and the segments 36, 38, 40 and 42 are bent in the other direction. Figure 7 shows the height I of the bent segment 39, whereby the height is most advantageously about 55 mm. The letter B in figure 7 represents the angle, in which the blade's segments 35 to 42 are bent with regard to the central plane of the blade 1. In the preferred exemplary blade 31 of the figure the angle B is about 40 degrees.

Figure 7 shows also the cross-section of one hole 34. The hole 34 is circular on one side 44, and on the other side 45 it is square.

An advantage of the incompletely circular blade presented in the figures 6 and 7 is that it is easy to replace with a new one. The blades can be replaced and taken out one at a time, as a blade 31 will immediately fall off the blade shaft when for instance the three bolts in the holes 34 have been released. If the blade shaft would pass through a hole in the centre of the blade, then it would be necessary to first take the blade shaft out from its frame and then to slip the blades off the blade shaft over its end.

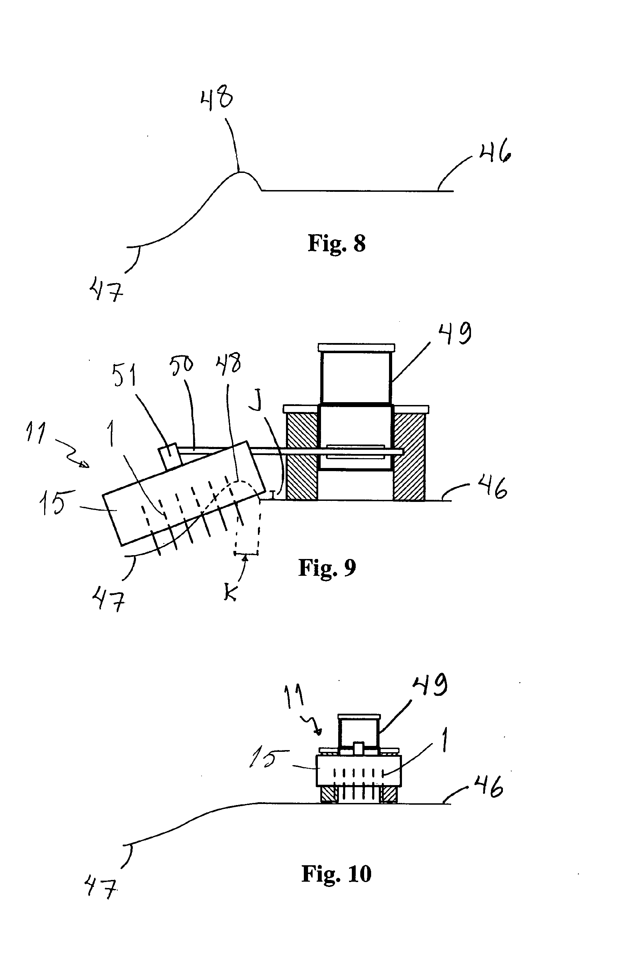

Figures 8, 9 and 10 present an example of an advantageous method and of the use of an apparatus 11 according to the invention. Figure 8 shows schematically the surface 46 of a paved road and the road bank 47 at its edge. Between the road bank and the road there is often formed a ridge 48 of sand, stone, etc. The ridge 48 disturbs the use of the road, and it makes it for instance more difficult for water to flow away from the roadway.

Figure 9 shows how an apparatus mounted at the rear of a tractor 49 removes a rise 48 in the ground and levels the road bank 47. The road bank 47 can be levelled with the aid the invention, even if the tractor 49 the whole time is riding on the even roadway. The figure presents the levelling drag 15, the blades 1 and the supporting means of the apparatus 11. Those parts of the blades 1, which are behind the drag 15 are shown in broken lines. For the sake of clarity the figure shows only the boom 50 of the supporting means, with which the levelling drag 15 and the blades 1 can be moved transversally with regard to the driving direction of the tractor 49, and the turning means 51, with which the drag 15 and the blade shaft (not shown) with the blades 1 fastened to it can be turned with regard to the horizontal, or in practice with regard to the level of the road's surface 46. In figure 9 the levelling drag 15 and the blades 1 are moved outside the width of the tractor 49 with the aid of the boom 50, over the road bank 47. The levelling drag 15 and the blades 1 are tilted with regard to the plane of the road's surface 46, in parallel with the desired plane of the road bank 47. The blades 1 cut into the rise 48 in the ground and into the ground of the bank 47, whereby they loosen the ground and crush it. The levelling drag 15 follows them and levels the loosened ground. The final result is shown in the figure 10.

The apparatus 11 according to the invention can level road banks 47 without endangering the paved surface 46 of the road. The apparatus 11 comprises preferably means for adjusting the height of the levelling drag 15 and the blade shaft. Advantageously the height and the position of the levelling drag 15 can be also adjusted with regard to the blade shaft, for instance with the aid of suitable hinges and hydraulic cylinders. Thus, according to the figure 9, the levelling drag 15 can be kept at a desired height J from the paved surface 46. The means enabling the transversal movement, such as the boom 50 in the figures, makes it possible to keep the blades 1 always at a certain distance K from the edge of the road's pavement. For example in the manner shown in figure 9 the apparatus 11 according to the invention can easily level a road bank 47 so that the loose ground will not cause a new ridge at the outer edge of the levelling drag 15, lower on the bank. Ridges in the central parts of the road bank make it for instance more difficult to cut the grass on the road banks.

We have no intention to restrict the invention only to the embodiments presented in the description above, but it may be varied within the inventive idea presented in the claims.

## Claims

1. Apparatus (11) to be attached to a work machine for levelling a gravel road or corresponding unpaved ground, which apparatus (11) comprises a frame (12), and attached to it
- means (1, 3) for loosening roughness of the ground,
- means (15), such as a levelling drag, for levelling the loosened ground,
- means (16, 16b, 17) for removable fastening of the apparatus to a work machine, preferably to its lifting mechanism, and
- power transmission means (18, 19, 20, 21) for transmitting power from said work machine to said means (1, 3) for loosening roughness of the ground,
**characterised in that** the means for loosening roughness of the ground comprise a blade shaft (3), which is arranged to be rotated around an at least mainly horizontal axis by the power transmission means (18, 19, 20, 21), and one or more blades (1), which are detachably attached to the shaft.

2. An apparatus according to claim 1, **characterised in that** the apparatus (11) comprises means (51) for keeping the blade shaft (3) in a substantial angle with regard to the horizontal.

3. An apparatus according to claim 1 or 2, **characterised in that** the blade shaft (3) is arranged in an angle (α) of less than 90 degrees with regard to the pulling direction of the apparatus (11), whereby the angle (α) is typically 70 to 85 degrees, preferably 75 to 80 degrees.

4. An apparatus according to any previous claim, **characterised in that** it comprises a sub-frame (14, 50), which is attached to the frame (12) so that it is movable sideways and/or in the vertical direction, whereby said means (1, 3) for loosening roughness of the ground and the means (15) for levelling the loosened ground are attached to this sub-frame.

5. An apparatus according to any previous claim, **characterised in that** it comprises means (23) for moving the means (15) for levelling the loosened ground in the vertical direction with regard to the sub-frame (14).

6. An apparatus according to any previous claim, **characterised in that** the blades (1, 31) are mainly planar and circular or sectors of a circle, and that they are arranged on the blade shaft, mainly perpendicular to the direction of the blade shaft (3).

7. An apparatus according to claim 6, **characterised in that** the blades (1) are arranged to be bent at their edges (4 - 7, 35 - 42).

8. A method for levelling a gravel road or corresponding unpaved ground, in which method an apparatus (11), which is detachably attached to a work machine (49), is moved on the ground to be levelled, whereby the apparatus loosens roughness of the ground and levels the loosened ground with a levelling drag (15) or a corresponding passive leveller, **characterised in that** the power mainly loosening the roughness of the ground is transmitted by power transmission means (18, 19, 20, 21) from the work machine to the blade shaft (3) of the apparatus, whereby the shaft is rotated by said power, and whereby one or more blades (1) are detachably attached to the shaft (3) and kept in contact with the ground to be levelled during operation of the apparatus (11).

9. A method according to claim 8, **characterised in that** the blade shaft (3) is kept, and the ground is levelled, advantageously completely outside the width of the work machine (49).

10. A method according to claim 8 or 9, **characterised in that** in the method during levelling of the ground the blade shaft (3) is kept at a substantial angle with regard to the horizontal in order to obtain a levelled ground, which is sloping with regard to the horizontal.

11. A blade (1, 31) for loosening roughness on a gravel road or corresponding unpaved ground and to be used in an apparatus according to any previous claim 1 to 7 or in a method according to any previous claim 8 to 10, **characterised in that** the blade (1, 31) is mainly round or a sector of a circle and plate-like, and that at least two or more bent parts (4 - 7, 35- 42) are arranged in the edge of the blade at an angle with regard to the plane of the central part of the blade (1, 31), which bent parts are advantageously arranged on both sides of the blade (1).

12. A blade according to claim 11, **characterised in that** the bent parts are located at the edge of the blade (1) in pairs on opposite sides of the centre of the blade, and that these opposite bent parts are at least substantially equally large (H) and at the same angle (A) with regard to the plane of the blade's (1) central part, and bent to the same side of the blade (1).

13. A blade according to claim 11 or 12, **characterised in that** the blade (1, 31) has bent parts (4 - 7, 35 - 42) along its whole outer periphery, advantageously so that the adjacent bent parts are always bent into opposite directions with regard to the plane of the blade's (1, 31) central part.

14. A blade according to any previous claim 11 - 13, **characterised in that** it has the form of circle sector, advantageously at least approximately a semicircle, and that attachment means (34) are arranged at the central part of the blade (31) for detachably attaching it to the blade shaft (3).
